## Europäisches Patentamt
## European Patent Office
## Office européen des brevets

(19)

(11) Veröffentlichungsnummer: **0 277 524**
**B1**

(12) **EUROPÄISCHE PATENTSCHRIFT**

(45) Veröffentlichungstag der Patentschrift:
**11.07.90**

(21) Anmeldenummer: **88100543.3**

(22) Anmeldetag: **16.01.88**

(51) Int. Cl.⁵: **C02F 1/48**

(54) **Vorrichtung zur Wasseraufbereitung.**

(30) Priorität: 04.02.87 DE 8701627 U
10.12.87 DE 8716322 U

(43) Veröffentlichungstag der Anmeldung:
**10.08.88 Patentblatt 88/32**

(45) Bekanntmachung des Hinweises auf die Patenterteilung:
**11.07.90 Patentblatt 90/28**

(84) Benannte Vertragsstaaten:
**AT BE CH DE ES FR GB IT LI LU NL SE**

(56) Entgegenhaltungen:
**CH-A- 497 204**
**US-A- 4 366 053**

(73) Patentinhaber: **Sauer, Rolf Georg, Sonnenrain 17,
D-7263 Bad Liebenzell(DE)**

(72) Erfinder: **Sauer, Rolf Georg, Sonnenrain 17, D-7263 Bad
Liebenzell(DE)**

(74) Vertreter: **Hubbuch, Helmut, Dipl.-Ing et al,
Westliche 29-31 Am Leopoldplatz,
D-7530 Pforzheim(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Vorrichtung zur Wasseraufbereitung, bei welcher das Wasser durch Magnetfelder geführt wird.

Solche Vorrichtungen sind bekannt. So ist beispielsweise im DE-GM 84 22 660 ein Gerät beschrieben, bei welchem zwei tellerförmige Scheiben ein Gehäuse bilden mit Ein- und Austrittsöffnungen für das Wasser in der Mitte der Scheiben, während das Gehäuse einen kreissymmetrischen Innenraum bildet mit mittiger Prallplatte, deren Aussenrand im Abstand vom Gehäuse angeordnet ist und konzentrisch zur Prallplatte eine Spule im Gehäuserand untergebracht ist, welche ein Feld erzeugt. Diese Geräte neigen aber nach wie vor zur Verstopfung und sind überdies durch die Scheibenform schlecht bei Wasserleitungen anzuordnen, da der notwendige Abstand zur Wand nicht vorhanden ist. Überdies benötigen diese Geräte für die Stromspule einen elektrischen Anschluß und besondere Isolationsmaßnahmen.

Es ist nun Aufgabe der Vorrichtung gemäß der Erfindung eine leichter zu reinigende und in der Form platzsparende Anordnung bei effizientem Wasserdurchgang zu schaffen, die gut an der Wand anzuordnen ist und überdies keinen elektrischen Anschluß bedarf.

Die Vorrichtung zur Wasseraufbereitung, bei welcher das Wasser durch Magnetfelder geführt wird kennzeichnet sich gemäß der Erfindung dadurch, daß zwei im Abstand zueinander verlaufende Rohrstücke mit einander zugekehrten Längsschlitzen versehen sind und das eine Rohrstück einen Wassereinlaß und das zweite Rohrstück einen Wasserauslaß aufweist, bei Verbindung beider Längsschlitze über einen Plattenkasten, welcher innenseitig angeordnete Permanentmagnete aufweist. Hierdurch wird eine flache, raumsparende Form erreicht, die gut an der Wand anzuordnen ist.

Nach einem weiteren Gedanken der Erfindung kann sich die Vorrichtung zur Wasseraufbereitung, bei welcher das Wasser durch Magnetfelder geführt wird nach der Erfindung dadurch kennzeichnen, daß der Plattenkasten als auswechselbare Kassette ausgebildet ist, bestehend aus zwei im Abstand gehaltenen Platten mit innenseitig wechselweise, insbesondere aber einander gegenüberliegende Magneten, vorzugsweise querlaufenden Magnetreihen, welche zum Wasserdurchlauf im Abstand zueinander angeordnet sind und Ein- und Ausgangsschlitze bilden. Hierdurch wird der leichte Ausbau des Magnetteils zur Reinigung oder zum Austausch bei angeschlossenem Gerät und abgestellter Wasserzufuhr ermöglicht.

Auch kann der Wasserdurchgang und damit die Effizienz dadurch weiter erhöht werden, daß anstelle von einer zwei Kassetten beidseits in entsprechende Ausnehmungen am Plattenkasten zwischen beiden quer verlaufenden Ein- und Ausgangsrohren mit jeweils zugehörigen Längsschlitzen passend einbringbar und mittels Abdeckplatten verschließbar sind. Hierbei weist bei beidseitig einbringbaren Kassetten der Plattenkasten eine Zwischenwand auf und die quer verlaufenden Rohre sind mit je einem Längsschlitz beidseits der Zwischenwand für die jeweils zugehörige Kassette versehen.

Durch Siebeinbauten bzw. Filterpatronen und Aktivkohlepatronen kann überdies eine Verstopfung vermieden und Wassererverbesserung erreicht, sowie durch die Magnetfelder einer Verkalkung vorgebeugt werden.

Zwei bevorzugte Ausführungsformen einer erfindungsgemäßen Vorrichtung sind beispielsweise in der Zeichnung dargestellt und nachfolgend beschrieben und zwar zeigen:

**Fig.** 1 einen Längsschnitt durch eine erste Vorrichtung,
**Fig.** 2 einen Querschnitt hierzu und
**Fig.** 3 einen Einblick in eine zweite Vorrichtung ohne Kassetten teilweise aufgebrochen,
**Fig.** 4 einen Einblick in diese Vorrichtung mit eingesetzten und teilweise aufgebrochenen Kassetten und
**Fig.** 5 einen Querschnitt hierzu.

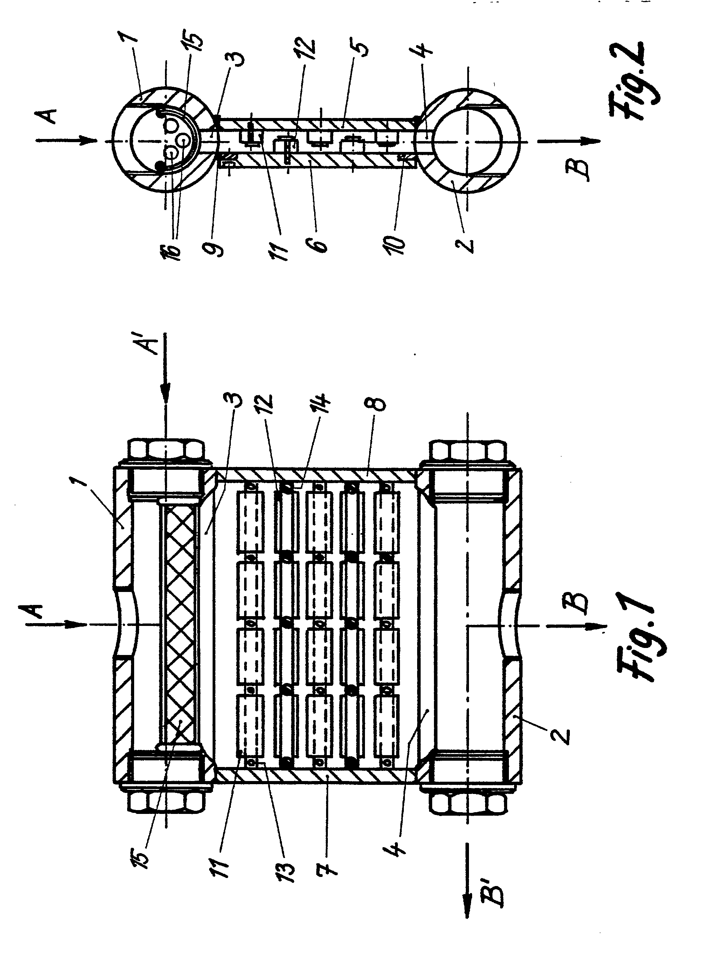

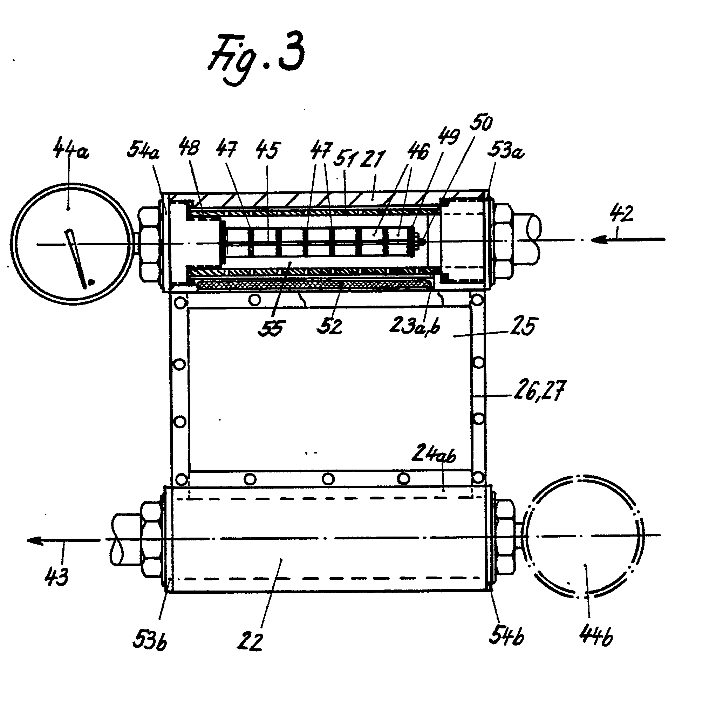

Wie aus Fig. 1 und 2 beim ersten Ausführungsbeispiel ersichtlich wird, besteht die Vorrichtung gemäß der Erfindung aus zwei im Abstand zueinander verlaufenden Rohrstücken 1 und 2 mit einander zugeordneten Längsschlitzen 3 und 4, welche durch einen Plattenkasten aus Platten 5 und 6 mit Verschlußseiten 7 und 8 verbunden sind. Hiervon ist die Platte 5 mit den Querteilen 7 und 8 jeweils an einer Rohrschlitzseite von 3 und 4 angeschweißt, während die zweite Platte 6 an Stegen 9, 10 der anderen Rohrschlitzseite von 3 und 4 lösbar verschraubt ist, wodurch eine leichte Reinigung möglich wird.

Quer zum Wasserdurchfluß sind an der Innenseite der beiden Platten 5 und 6 wechselweise Dauermagneten 11 und 12 im Abstand neben- und untereinander liegend mittels Klemmblechstreifen 13 und 14 befestigt. Diese Dauermagnete 11 und 12 vermeiden mit ihrem Magnetfeld durch Polarisationswirkung eine Verbindung der Hydrogencarbonate und damit eine Verkrustung (Verkalkung) von Rohrleitungen, Waschmaschinen, Geschirrspülautomaten und dergleichen mehr.

Anstelle der im Abstand zueinander neben- und untereinander liegenden Dauermagnete können quer zum Wasserdurchfluß an den Innenseiten der Platten auch wechselnde Dauermagnete ohne Abstand neben- und untereinanderliegend jeweils zu einem Block zusammengefaßt angeordnet sein, wobei die beiden einander gegenüberliegenden Blocks einen Abstand zueinander von 2 bis 5mm haben, was eine starke Magnetfeldwirkung ergibt.

Auch kann der Plattenkasten zwischen den Längsschlitzen der beiden Rohrstücke durch eine Mittelplatte geteilt sein, welche Mittelplatte beidseits mit Permanentmagneten belegbar ist, derart, daß zwei Wasserdurchgänge hintereinanderliegend angeordnet sind.

Wie weiter aus der Zeichnung ersichtlich wird, ist im Eingangsrohrstück 1 bei Wasserzuleitung A bzw. A' in der unteren Hälfte über der Längsschlitzung 3 ein herausnehmbares Halbsieb 15 sowie längslaufende Magnetstäbe 16 als Magnetfilter eingebaut. Anstelle desselben kann auch eine herausnehmbare Filterpatrone angeordnet und schließlich im Ausgangsrohrstück 2 eine auswechselbare Aktivkohle-Patrone zur Wasserverbesserung vorgesehen sein, wie dies hier nicht besonders dargestellt ist. die Wasserableitung erfolgt sodann über B bzw. B' wie eingezeichnet.

Für eine Reinigung der Vorrichtung kann das Halbsieb 15 bzw. die Filterpatrone herausnehmbar und die Aktivkohle-Patrone, wie geschildert, auswechselbar sein; auch kann die eine Platte 6 des Plattenkastens abschraubbar sein. Schließlich kann bei Absperrventilen am Wassereingang A und -Ausgang B auch eine Reinigung über den lösbaren Stutzen A' zum lösbaren Stutzen B' durch Einfüllen von Reinigungsflüssigkeit bei A' und späterem Ablassen bei B' erfolgen.

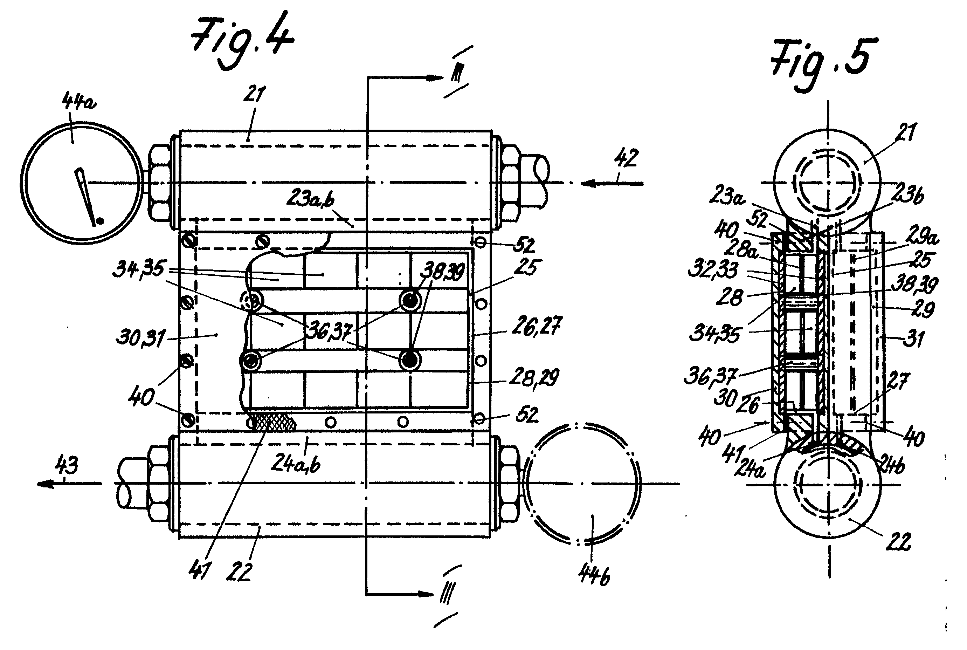

Wie weiter aus Fig. 3 bis 5 beim zweiten Ausführungsbeispiel ersichtlich wird, besteht die Vorrichtung gemäß der Erfindung aus zwei im Abstand zueinander verlaufenden Rohrstücken 21 und 22 mit jeweils einem Rohrstück zugeordneten Längsschlitzen 23a, b und 24a, b welche durch einen Plattenkasten mit Zwischenwand 25 und beidseits vorgesehenen Ausnehmungen 26, 27 zum Einsetzen der Kassetten 28, 29 sowie Verschluß mittels Abdeckplatten 30,31 versehen sind.

Die beidseits in Ausnehmungen 26,27 des Plattenkastens einbringbare Kassetten 28, 29 bilden mit Längsspalten 28a und 29a die Anschlüsse für die jeweiligen Längsschlitze 23a, b und 24a, b der Rohrstücke 21 und 22. Die auswechselbaren Kassetten 28, 29 sind aus zwei im Abstand verschraubten Platten 32 und 33 gebildet, an deren Innenseite quer zum Wasserdurchlauf einander gegenüberliegende Magnetreihen 34, 35 mit die Längsspalten 28a und 29a bildendem Abstand eingeklebt sind. Auch können die Magnete bzw. Magnetreihen längs zum Wasserdurchlauf angeordnet sein, wie dies hier nicht besonders dargestellt ist und in beiden Fällen wechselweise angeordnet sein. Die Kassetten 28, 29 lassen sich somit aus den Ausnehmungen 26, 27 nach Abnahme der Abdeckplatten 30,31 herausnehmen und durch Lösen der Schrauben 36,37 auseinander nehmen und reinigen, wobei beim Zusammenbau die um die Schrauben 36, 37 liegenden Distanzrohre 38, 39 wiederum für den richtigen Abstand sorgen. Nach dem Einsetzen erfolgt der Verschluß der Ausnehmungen 26,27 wiederum durch Außenverschraubung 40 der Platten 30, 31 unter Zwischenlage von Rangdichtungen 41.

An den Rohrstücken 21 und 22 wird am einen Rohr 21 einerseits der Wassereinlaß 42 und am anderen Rohr 22 andererseits der Wasserauslaß 43 angeschlossen. Wechselweise hierzu sind an den freien Rohrstücken 21 bzw. 22 Ein- und Ausgangsmanometer 44a und 44b angeordnet.

Im Eingangsrohr 21 sind auf einer Durchzugsschraube 45 Magnete 46 unter Zwischenraum zu demselben und Zwischen-lage antimagnetischer Scheiben 47 zur Aufteilung deren Magnetfelder auswechselbar aufgereiht gehalten. Hierbei sind die Magnete 46 auf der Durchzugsschraube 45 einerseits mittels Endaufnahme 48 im Eingangsrohr 21

und andererseits mittels Abschlußdeckel 49 und Schraubmutter 50 gehalten.

Im Eingangsrohr 21 kann ferner ein V2A-Siebrohr 51 zur Teilchen-Rückhaltung eingesetzt sein, welchem gegeben falls ein Kunststoffkäfig 52 als Schmutzfilter an den Schlitzungen 23a, 23b vorgeschaltet sein kann. In entsprechender Weise kann auch, wie hier nicht besonders gezeichnet, im Ausgangsrohr 22 ein V2A-Siebrohr eingesetzt sein, welchem gegebenenfalls ein Aktivkohlefilter zur Beseitigung von Fremdgeschmack an den Schlitzungen vorgeschaltet sein kann. Am Ein- und Ausgang sind Anschlußstopfen 53a,b und 54a, b mit Dichtungsmanschetten vorgesehen.

Das Wasser tritt somit über den Einlaß 42 mit Anschluß 53a in den Ringraum 55 im Rohrstück 21 und von hier in die Längsschlitze 23a, 23b und läuft an den Magneten 34, 35 durch Längsspalte 28a, 29a und die Längsschlitze 24a, 24b in das Rohrstück 22 zum Auslaß 43 mit Anschluß 53b jeweils eingangsseitig noch unter Einschaltung von weiteren Magneten 46 gegebenenfalls einem Rohrsieb 51 und Kunststoffkäfig 52 sowie ausgangsseitig gegebenenfalls einem Rohrsieb und Aktivkohlefilter. Die weiteren Anschlußstopfen 54a und 54b am Ein- bzw. Ausgang nehmen die Ein- und Ausgangsmanometer 44a und 44b auf ebenfalls mit Dichtungsmanschetten.

Die Magnete 34, 35 können quer und längs sowie stehend oder liegend in den Kassetten 28 bzw. 29 angeordnet und jeweils zu Reihen zusammengeschlossen sein.

Unter Wasseraufbereitung wird hier vor allem verstanden die Umwandlung von Karbonatkristallen in quadratische Formen, welche sich nicht mehr miteinander verbinden, wodurch eine Verkrustung und Kalkablagerungen ver hindert werden, während das erwünschte Kalzium als neutrale Substanz im Wasser verbleibt. Somit wird die Kesselsteinbildung verhindert. Desweiteren kann das Wasser, wie vorgeschildert, feingereinigt und geruchsfrei gemacht werden.

**Patentansprüche**

1. Vorrichtung zur Wasseraufbereitung, bei welcher das Wasser durch Magnetfelder geführt wird, dadurch gekennzeichnet, daß zwei im Abstand zueinander verlaufende Rohrstücke mit einander zugekehrten Längsschlitzen versehen sind und das eine Rohrstück einen Wassereinlaß und das zweite Rohrstück einen Wasserauslaß aufweist bei Verbindung beider Längsschlitze über einen Plattenkasten, welcher innenseitig angeordnete Permanentmagnete aufweist.

2. Vorrichtung nach Anspruch 1, dadurch gekennzeichnet, daß bei dem Plattenkasten die eine Platte mit zwei Querseiten jeweils entlang der einen Rohrschlitzseite angebracht ist, während die zweite Platte an Stegen der anderen Rohrschlitzseite lösbar verschraubt ist.

3. Vorrichtung nach Anspruch 1 oder 2, dadurch gekennzeichnet, daß quer zum Wasserdurchfluß an den Innenseiten der beiden Platten wechselweise Dauermagnete in Reihe im Abstand neben- und untereinanderliegend mittels Klemmblechstreifen befestigt sind.

4. Vorrichtung nach Anpsruch 1 oder 2, dadurch gekennzeichnet, daß quer zum Wasserdurchfluß an den Innenseiten der Platten wechselnde Dauermagnete ohne Abstand neben- und untereinanderliegend jeweils zu einem Block zusammengefaßt angeordnet sind, wobei die beiden einander gegenüberliegenden Blocks insbes. einen Abstand zueinander von 2 bis 5mm haben.

5. Vorrichtung nach einem der vorhergehenden Ansprüche, dadurch gekennzeichnet, daß der Plattenkasten zwischen den Längsschlitzen der beiden Rohrstücke durch eine Mittelplatte geteilt ist, welche Mittelplatte beidseits mit Permanentmagneten belegbar ist, derart, daß zwei Wasserdurchgänge neben bzw. hintereinanderliegend angeordnet sind.

6. Vorrichtung nach einem der vorhergehenden Ansprüche, dadurch gekennzeichnet, daß der Plattenkasten als auswechselbare Kasette ausgebildet ist, bestehend aus zwei im Abstand gehaltene Platten mmit innenseitig wechselweise, insbes. aber einander gegenüberliegenden Magneten, vorzugsweise querlaufenden Magnetreihen, welche zum Wasserdurchlauf im Abstand zueinander angeordnet sind und Ein- und Ausgangsschlitze bilden.

7. Vorrichtung nach Anspruch 6, dadurch gekennzeichnet,daß ein oder zwei Kasetten einer bzw. beidseits in entsprechende Ausnehmungen am Plattenkasten zwischen beiden quer verlaufenden Ein- und Ausgangsrohren mit jeweils zugehörigen Längsschlitzen passend einbringbar und mittels Abdeckplatten verschließbar sind.

8. Vorrichtung nach Anspruch 7, dadurch gekennzeichnet, daß bei beidseitig einbringbaren Kassetten der Plattenkasten eine Zwischenwand aufweist und die quer verlaufenden Rohre mit je einem Längsschlitz beidseits der Zwischenwand für die jeweils zugehörige Kassette versehen sind.

9. Vorrichtung nach Anspruch 6 bis 8, dadurch gekennzeichnet, daß bei quer bzw. längs zum Wasserdurchlauf einander gegenüberliegend oder zueinander wechselweise angeordneten Magneten dieselben an den Innenwänden der Kassetten vorzugsweise eingeklebt sind.

10. Vorrichtung nach einem der Ansprüche 6 bis 9, dadurch gekennzeichnet, daß die beiden Platten jeder Kassette mittels Schrauben unter Zwischenschaltung von Distanzrohren lösbar miteinander verbunden sind.

11. Vorrichtung nach einem der Ansprüche 6 bis 10, dadurch gekennzeichnet, daß die ein- oder beidseitigen Abdeckplatten des Plattenkastens zwischen den beiden quer verlaufenden Rohren mittels Schrauben wasser-und druckdicht unter Zwischenlage einer Dichtung aufgebracht sind.

12. Vorrichtung nach einem der vorhergehenden Ansprüche, dadurch gekennzeichnet, daß auch im Eingangsrohr Magnete mit außenseitigem Zwischenraum angeordnet und vorzugsweise mittels einer Durchzugsschraube auswechselbar gehalten sind, wobei zwischen den aufgereihten Magneten antimagnetische Scheiben zur Trennung der Magnetfelder eingesetzt sein können.

13. Vorrichtung nach Anspruch 12, dadurch gekennzeichnet, daß die Magnete auf der Durchzugsschraube einerseits mittels Verschlußstopfen im Eingangsrohr und andererseits mittels Abschlußdeckel und Schraubmutter aufgereiht gehalten sind.

14. Vorrichtung nach einem der vorhergehenden Ansprüche, dadurch gekennzeichnet, daß im Eingangsrohr ein Siebrohr eingesetzt ist, welchem gegebenenfalls noch ein Kunststoffkäfig als Schmutzfilter an den Schlitzungen nachgeschaltet ist.

15. Vorrichtung nach einem der vorhergehenden Ansprüche, dadurch gekennzeichnet, daß im Ausgangsrohr ein Siebrohr eingesetzt ist, welchem gegebenenfalls noch ein Aktivkohlefilter an den Schlitzungen vorgeschaltet ist.

16. Vorrichtung nach einem der vorhergehenden Ansprüche, dadurch gekennzeichnet, daß am Ein- und Ausgangsrohr die Wasserein- bzw. Auslässe wechselweise angeschlossen sind, während am jeweils freien Rohrstutzen Ein- und Ausgangsmanometer angeordnet sind.

**Revendications**

1. Dispositif pour le traitement des eaux dans lequel l'eau traverse des champs magnétiques, caractérisé en ce que deux sections de tube s'étendant à distance l'une de l'autre sont munies de fentes longitudinales dirigées l'une vers l'autre et que les sections de tube comportent l'une une entrée d'eau et l'autre une sortie d'eau, avec raccordement des deux fentes longitudinales par l'intermédiaire d'une boîte à plaques munie d'aimants permanents disposés sur la face intérieure.

2. Dispositif selon la revendication 1, caractérisé en ce que dans la boîte à plaques l'une des plaques est disposée respectivement avec deux faces transversales le long de l'un des côtés de la fente du tube, tandis que l'autre plaque est vissée de manière amovible sur des barrettes de l'autre côté de la fente du tube.

3. Dispositif selon l'une des revendications 1 ou 2, caractérisé en ce que, transversalement au passage de l'eau, les faces intérieures des deux plaques portent alternativement des aimants permanents disposés en rangées, à distance à côté et en dessous les uns des autres et fixés au moyen de bandes de tôle à griffes.

4. Dispositif selon l'une des revendications 1 ou 2, caractérisé en ce que, transversalement au passage de l'eau, les faces intérieures des plaques portent des aimants permanents placés en alternance sans distance à côté et en dessous les uns des autres et respectivement groupés en un bloc, les blocs situés en face les uns des autres présentant entre eux une distance de 2 à 5 mm.

5. Dispositif selon l'une des revendications précédentes, caractérisé en ce que la boîte à plaques est divisée entre les fentes longitudinales des deux sections de tube par une plaque médiane laquelle peut être équipée de chaque côté d'aimants permanents de façon à obtenir deux passage d'eau juxtaposés et respectivement placés l'un derrière l'autre.

6. Dispositif selon l'une des revendications précédentes, caractérisé en ce que la boîte à plaques est conformée en cassette interchangeable constituée de deux plaques maintenues à distance l'une de l'autre dont la face intérieure est munie d'aimants placés en alternance, mais notamment en face les uns des autres, de préférence de rangées d'aimants orientées transversalement, lesquels sont disposés à distance l'une de l'autre pour permettre le passage de l'eau et forment des fentes d'entrée et de sortie.

7. Dispositif selon la revendication 6, caractérisé en ce qu'une ou deux cassettes peuvent être insérées d'un côté et respectivement des deux côtés dans des évidements correspondants ménagés dans la boîte à plaques entre les deux tubes d'entrée et de sortie orientés transversalement et présentant respectivement des fentes longitudinales associées et qu'elles peuvent être fermées au moyen de plaques de recouvrement.

8. Dispositif selon la revendication 7, caractérisé en ce que, pour des cassettes pouvant être insérées des deux côtés, la boîte à plaques comprend une cloison intermédiaire et que les tubes placés transversalement sont munis chacun d'une fente longitudinale de part et d'autre de la cloison intermédiaire pour la cassette respectivement associée.

9. Dispositif selon l'une des revendications 6 à 8, caractérisé en ce que, pour des aimants disposés transversalement et respectivement longitudinalement par rapport au passage de l'eau, en face les uns des autres ou en alternance, lesdits aimants sont de préférence collés sur les faces intérieures des cassettes.

10. Dispositif selon l'une des revendications 6 à 9, caractérisé en ce que les deux plaques de chaque cassette sont reliées entre elles de manière amovible au moyen de vis, avec interposition de douilles d'écartement.

11. Dispositif selon l'une des revendications 6 à 10, caractérisé en ce que les plaques de recouvrement de la boîte à plaques disposées sur un seul ou sur les deux côtés sont montées de manière étanche à l'eau et à la pression entre les deux tubes orientés transversalement au moyen de vis, avec interposition d'un joint d'étanchéité.

12. Dispositif selon l'une des revendications précédentes, caractérisé en ce que le tube d'entrée contient également des aimants disposés avec un écartement du côté extérieur et maintenus de préférence de manière interchangeable au moyen d'une vis traversante, des rondelles antimagnétiques pouvant être intercalées entre les aimants enfilés pour séparer les champs magnétiques.

13. Dispositif selon la revendication 12, caractérisé en ce que les aimants sont maintenus enfilés sur la vis traversante d'une part au moyen de bouchons de fermeture dans le tube d'entrée et d'autre part au moyen d'un couvercle de fermeture et d'un écrou.

14. Dispositif selon l'une des revendications précédentes, caractérisé en ce que dans le tube d'entrée est inséré un tube-tamis en aval duquel un panier en matière plastique servant de filtre de crasse est éventuellement prévu sur les fentes.

15. Dispositif selon l'une des revendications précédentes, caractérisé en ce que dans le tube de sortie est inséré un tube-tamis en amont duquel un filtre au charbon actif est éventuellement prévu sur les fentes.

16. Dispositif selon l'une des revendications précédentes, caractérisé en ce que sur les tubes d'entrée et de sortie sont raccordées alternativement les entrées et respectivement les sorties d'eau, tandis que des manomètres d'entrée et de sortie sont montés sur la tubulure respectivement libre.

## Claims

1. Water treatment device wherein the water is led through magnetic fields, characterised in that two pipe pieces extending at a distance from one another are provided with longitudinal slits turned towards one another and one pipe piece has a water inlet and the second pipe piece a water outlet, the two longitudinal slits being connected by means of a plate box which has permanent magnets arranged on the inside.

2. Device according to claim 1, characterised in that in the plate box the one plate is attached with two transverse sides in each case along the one pipe slit side, while the second plate is removably screwed on cross-pieces of the other pipe slit side.

3. Device according to claim 1 or 2, characterised in that at right angles to the water flow on the inner sides of the two plates permanent magnets are fixed alternately in a row at a distance from one another, lying alongside one another and one beneath the other, by means of binding metal strips.

4. Device according to Claim 1 or 2, characterised in that at right angles to the water flow on the inner sides of the plates alternating permanent magnets are arranged combined in a block in each case without a distance between them and lying alongside one another and one beneath the other, whereby the two blocks lying opposite one another are in particular at a distance of 2 to 5 mm from one another.

5. Device according to any one of the preceding claims, characterised in that the plate box is divided between the longitudinal slits of the two pipe pieces by a centre plate, said centre plate being able to be lined on both sides with permanent magnets in such a way that two water passages are arranged lying alongside one another or one behind the other.

6. Device according to any one of the preceding claims, characterised in that the plate box is designed as an exchangeable cassette, consisting of two plates kept at a distance with magnets lying alternately on the inside, in particular however opposite one another, preferably transverse rows of magnets, which are arranged at a distance from one another for water flow and form entrance and exit slits.

7. Device according to claim 6, characterised in that one or two cassettes can be conveniently placed on one or both sides into corresponding recesses on the plate box between the two entrance and exit pipes extending at right angles with accompanying longitudinal slits in each case and closed by means of cover plates.

8. Device according to claim 7, characterised in that in the case of cassettes which can be placed on both sides the plate box has a partition wall and the pipes extending at right angles are each provided with a longitudinal slit on both sides of the partition wall for the appropriate cassette in each case.

9. Device according to claim 6 to 8, characterised in that in the case of magnets lying opposite each other or arranged alternately at right angles to or along the water flow the latter are preferably stuck on the inner walls of the cassettes.

10. Device according to one of claims 6 to 9, characterised in that the two plates of each cassette are removably connected with one another by means of screws with distance pipes being inserted intermediately.

11. Device according to one of claims 6 to 10, characterised in that the cover plates on one or both sides of the plate box are applied water- and pressure-tight between the two pipes extending at right angles by means of screws with a seal being inserted intermediately.

12. Device according to one of the preceding claims, characterised in that magnets with a space on the outside are also arranged in the entrance pipe and are preferably held exchangeable by means of a throughgoing screw, whereby anti-magnetic disks can be inserted between the rows of magnets in order to separate the magnetic fields.

13. Device according to claim 12, characterised in that the magnets are maintained in a row on the throughgoing screw on the one hand by means of stoppers in the entrance pipe and on the other hand by means of cover plates and nuts.

14. Device according to one of the preceding claims, characterised in that a filter pipe in inserted in the entrance pipe to which an artificial cage is connected at the outlet side as a dirt filter at the slits if need be.

15. Device according to one of the preceding claims, characterised in that a filter pipe in inserted in the exit pipe to which a charcoal filter is connected at the inlet side at the slits if need be.

16. Device according to one of the preceding claims, characterised in that the water inlets and outlets are connected alternately at the entrance and exit pipe while entrance and exit manometers are arranged at each free pipe socket.

Fig.1

Fig.2

EP 0 277 524 B1

# Fig. 3

44a  54a  48  47  45  47  51  21  46  49  50  53a

42

55  52  23a,b  25

26,27

24ab

43

53b  22  54b  44b

Fig. 5

Fig. 4